# EUROPEAN PATENT APPLICATION

(11) **EP 4 578 755 A1**
(43) Date of publication of application: **02.07.2025**
(21) Application number: 24218945.4
(22) Date of filing: 11.12.2024
(51) Int. Cl.: B60W 50/14, G08G 1/0967

(54) **APPARATUS FOR TRANSMITTING, RECEIVING, OR PROCESSING DATA EXCHANGED BETWEEN AUTOMATED DRIVING SYSTEM AND USER TERMINAL ACCORDING TO PRIORITY THEREOF AND METHOD THEREFOR**

(30) Priority: 27.12.2023 KR 20230193147; 27.06.2024 KR 20240084403
(71) Applicant: Hyundai Mobis Co., Ltd., Gangnam-gu Seoul 06141 (KR)
(72) Inventor: LEE, Jae Yong, 16891 Yongin-si, Gyeonggi-do (KR)
(74) Representative: Jung, Minkyu

(57) **Abstract**

An apparatus to transmit and/or receive and process automated driving related information includes a transceiver and a processor to transmit and/or receive the automated driving related information with a user terminal through the transceiver and process the automated driving related information. The processor obtains information on a priority of the automated driving related information to be transmitted to the user terminal and, in a case in which the processor transmits a plurality of different types of automated driving related information, the processor transmits the plurality of the different types of the automated driving related information to the user terminal according to the obtained information on the priority.

## Description

### BACKGROUND

### Field of the Disclosure

The present disclosure relates to an apparatus or method for automated valet driving, and more particularly, to an information interface framework between an Automated Valet Driving System (AVDS) and a user terminal.

### Discussion of the Related Art

An AVDS consists of a user, a system, and an autonomous vehicle. The AVDS may perform automated valet driving control using an automated driving function.

It is possible to request or reserve additional services while delegating authority to automated valet driving control by AVDS.

Accordingly, an information interface framework for data transmission and reception is defined between an AVDS and a user terminal, and through this, data may be transmitted and received between the AVDS and the user terminal.

The present disclosure is to propose a method for transmitting/receiving or processing data according to priority of the data between an AVDS and a user terminal.

### SUMMARY

Accordingly, embodiments of the present disclosure are directed to an apparatus and method for transmitting, receiving, or processing data exchanged between an automated driving system and a user terminal according to priority thereof that substantially obviate one or more problems due to limitations and disadvantages of the related art.

According to the above-mentioned background, the present disclosure is to propose a method of transmitting/receiving or processing data according to priority of the data between an AVDS and a user terminal.

Technical tasks obtainable from the present disclosure are non-limited by the above-mentioned technical tasks. And, other unmentioned technical tasks can be clearly understood from the following description by those having ordinary skill in the technical field to which the present disclosure pertains.

Additional advantages, objects, and features of the disclosure will be set forth in the disclosure herein as well as the accompanying drawings. Such aspects may also be appreciated by those skilled in the art based on the disclosure herein.

To achieve these objects and other advantages, in one technical aspect of the present disclosure, an apparatus configured to transmit and/or receive and process automated driving related information includes: a transceiver; and a processor configured to transmit and/or receive the automated driving related information with a user terminal through the transceiver and process the automated driving related information. The processor is configured to obtain information on a priority of the automated driving related information to be transmitted to the user terminal, and in a case in which the processor transmits a plurality of different types of automated driving related information, the processor is configured to transmit the plurality of the different types of the automated driving related information to the user terminal according to the obtained information on the priority.

Additionally or alternatively, the automated driving related information to be transmitted to the user terminal may include a first type information including Minimal Risk Manoeuvre (MRM) execution notification or urgency safety information, a second type information including Minimal Risk Condition (MRC) arrival or manual driving request through user fallback, and a third type information including configuration of driving related control or information requiring a user approval.

Additionally or alternatively, a priority of the first type information may be set higher than a priority of the second type information, and a priority of the second type information may be set higher than a priority of the third type information.

Additionally or alternatively, a priority of the second type information may be set higher than a priority of the first type information, and a priority of the first type information may be set higher than a priority of the third type information.

Additionally or alternatively, the processor may be configured to obtain information on a priority of the automated driving related information to be received from the user terminal, and based on receiving or processing a plurality of different types of automated driving related information from the user terminal, the processor may be configured to process a plurality of the different types of the automated driving related information according to the obtained information on the priority.

Additionally or alternatively, the automated driving related information to be received from the user terminal may include a fourth type information notifying that a user is unable to perform Dynamic Driving Task (DDT) fallback and a fifth type information indicating a user's response to configuration of driving related control or information requiring a user approval transmitted to the user terminal.

Additionally or alternatively, the priority of the fourth type information may be set higher than a priority of the fifth type information.

In another aspect of the present disclosure, an apparatus configured to transmit and/or receive, and process automated driving related information may include a transceiver and a processor configured to transmit and/or receive the automated driving related information to or from an automated driving system through the transceiver and process the received automated driving related information, wherein the processor may be configured to obtain information on a priority of the automated driving related information to be received from the automated driving system and wherein based on receiving or processing a plurality of different types of automated driving related information from the automated driving system, the processor may be configured to process a plurality of the different types of the automated driving related information according to the obtained information on the priority.

Additionally or alternatively, the automated driving related information to be received from the automated driving system may include a first type information including Minimal Risk Manoeuvre (MRM) execution notification or urgency safety information, a second type information including Minimal Risk Condition (MRC) arrival or manual driving request through user fallback, and a third type information including configuration of driving related control or information requiring a user approval.

Additionally or alternatively, a priority of the first type information may be set higher than a priority of the second type information, and a priority of the second type information may be set higher than a priority of the third type information.

Additionally or alternatively, a priority of the second type information may be set higher than a priority of the first type information, and a priority of the first type information may be set higher than a priority of the third type information.

Additionally or alternatively, a priority of the second type information may be set higher than that of the third type information and a priority of the third type information is set higher than that of the first type information.

Additionally or alternatively, the processor may be configured to obtain information on a priority of the automated driving related information to be transmitted to the automated driving system, and in a case in which the processor transmits a plurality of different types of automated driving related information, the processor may be configured to transmit a plurality of the different types of the automated driving related information to the automated driving system according to the obtained information on the priority.

Additionally or alternatively, the automated driving related information to be transmitted to the automated driving system may include a fourth type information notifying that a user is unable to perform Dynamic Driving Task (DDT) fallback and a fifth type information indicating a user's response to configuration of driving related control or information requiring a user's approval transmitted to the user terminal.

Additionally or alternatively, a priority of the fourth type information may be set higher than a priority of the fifth type information.

In further aspect of the present disclosure, a method for transmitting/receiving and processing automated driving related information may include obtaining information on a priority of the automated driving related information to be transmitted to a user terminal and, in a case in which a plurality of different types of automated driving related information is to be transmitted to the user terminal, transmitting the plurality of the different types of the automated driving related information to the user terminal according to the obtained information on the priority.

The above-described solution of the present disclosure is some of the embodiments of the present disclosure. Various solutions other than the solutions of the above-described problems may be derived and understood based on the detailed description of the present disclosure to be described below.

Accordingly, the present disclosure has the following effects.

By setting the priority of automated driving related information and performing transmission or processing (reception) accordingly, it is possible to efficiently respond to each automated driving situation.

More specifically, an ADS may preferentially transmit an automated driving related information with a high priority among automated driving related informations to a user terminal.

In addition, the ADS may preferentially process an automated driving related information with high priority among automated driving related informations received from a user terminal.

In addition, the user terminal may preferentially transmit an automated driving related information with a high priority among automated driving related informations to the ADS.

In addition, the user terminal may preferentially process an automated driving related information with high priority among automated driving related informations received from the ADS.

Effects obtainable from the present disclosure may be non-limited by the above-mentioned effect. And, other unmentioned effects can be clearly understood from the following description by those having ordinary skill in the technical field to which the present disclosure pertains.

### BRIEF DESCRIPTION OF THE DRAWINGS

The accompanying drawings, which are included to provide a further understanding of the disclosure and are incorporated in and constitute a part of this application, illustrate embodiment(s) of the disclosure and together with the description serve to explain the principle of the disclosure. The above and other aspects, features, and advantages of the present disclosure will become more apparent upon consideration of the following description of preferred embodiments, taken in conjunction with the accompanying drawing figures. In the drawings:
FIG. 1 is a state diagram according to embodiments;
FIG. 2 is a diagram showing a Minimum Risk Manoeuvre (MRM) according to embodiments;
FIG. 3 is a diagram showing MRM classification;
FIG. 4 is a diagram showing a vehicle controller according to embodiments;
FIG. 5 is a diagram showing the structure of a vehicle according to embodiments;
FIG. 6 is a diagram showing an example of data transmission between an ADS and a user terminal according to the present disclosure;
FIG. 7 is a block diagram showing a system related to the present disclosure;
FIG. 8 is a flowchart illustrating information transmission based on a transmission priority according to the present disclosure; and
FIG. 9 is a flowchart illustrating information processing based on a processing priority according to the present disclosure.

### DETAILED DESCRIPTION

Hereinafter, embodiments of the present disclosure will be described with reference to the accompanying drawings.

Embodiments described below are intended to help the understanding of the present disclosure, and thus the present disclosure is not limited to embodiments described below. In addition, in the accompanying drawings, certain components may be illustrated as exaggerated or reduced in order to help the understanding of the present disclosure. The present disclosure is not limited to the form drawn in the accompanying drawings.

Throughout the specification, when a part "includes" a component, this means that it may further include other components, rather than excluding other components unless specifically opposed.

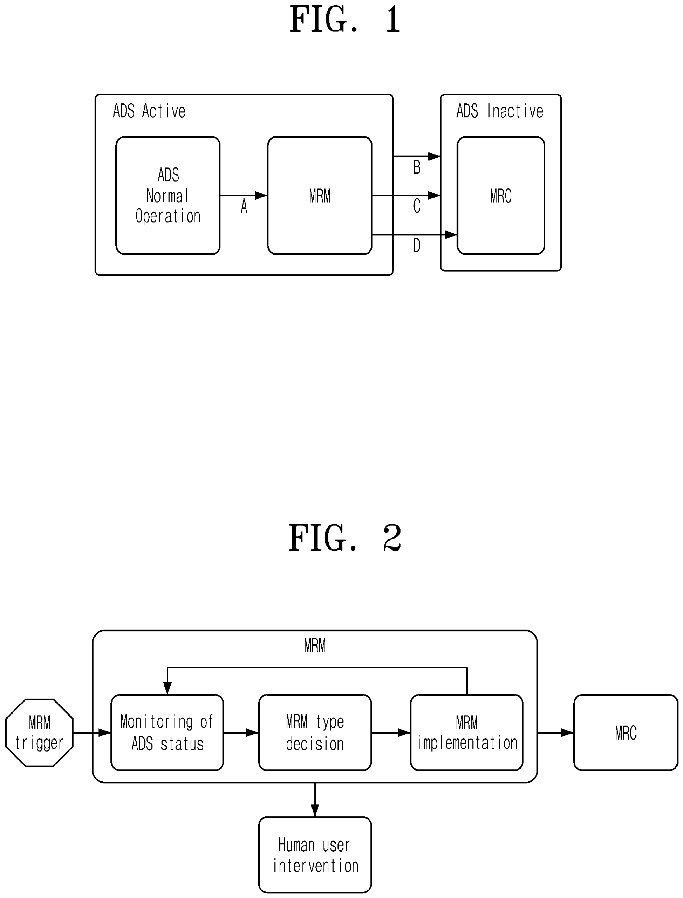

FIG. 1 shows an example MRM state diagram for MRM (3.1 Minimum Risk Maneuver). The specific states and switching conditions of MRM may vary from one Automated Driving System (ADS) to another.

The definitions of terms according to embodiments are as follows.

Minimum Risk Maneuver (MRM) refers to an operation performed by an ADS to reach a minimum risk condition. Minimum Risk Condition (MRC) is a stable, stationary state to which the user or ADS may bring the vehicle after performing a dynamic driving task (DDT) fallback to reduce the risk of a collision when a given movement cannot or should not be continued. Subject vehicle refers to a vehicle equipped with an ADS capable of performing MRM. Standstill management is an action taken by the ADS to maintain the vehicle in the MRC. Lane boundary refers to the boundary of a lane as determined by visible lane markings or, in the absence of visible lane markings, the boundary of a lane as determined by incidental visible road features or other means such as positioning related to digital maps, magnetic markers, etc. Road shoulder is a portion of a road that is placed at the edge of the road, outside the lane boundaries, to allow emergency vehicles to bypass traffic congestion or to provide a place for troubled vehicles to exit from moving traffic. Acceleration control refers to controls that use vehicle functions, such as powertrain control, to produce positive acceleration. Deceleration control refers to controls that use vehicle functions, such as brakes, to generate negative acceleration. ADS Active indicates that the ADS performs the entire DDT in the ADS active state, which is the ADS normal operation state or MRM state. In the case where the state is switched from the ADS Active to ADS Inactive (B), the ADS deactivation procedure defined for each ADS for the active ADS continues to apply. ADS Normal Operation means that in the ADS normal operation state, the ADS performs the DDT as the system is intended to operate. In the ADS Normal Operation state, the ADS determines whether the MRM is needed. When it is determined that the MRM is needed, the ADS switches to MRM (A). In the minimum risk maneuver state, the ADS controls its vehicle to reach the MRC state.

Abbreviations used in this document are defined as follows. ADS (Automated Driving System), DDT (Dynamic Driving Task), FRU (Fallback-Ready User), HMI (Human Machine Interface), MRM (Minimum Risk Maneuver), MRC (Minimum Risk Condition), OEDR (Object and Event Detection Response), ODD (Operational Design Domain), ROI (Region of Interest), RTI (Request to Intervene), SV (Subject Vehicle).

The MRM state is operated as follows. The ADS monitors the ADS status. The ADS determines the type of MRM. The ADS controls the subject vehicle (SV) to execute the MRM. The ADS notifies other traffic participants about the MRM execution. In the case where the SV has passengers, ADS notifies all passengers inside the SV about the MRM execution.

When the state is switched from MRM to ADS Inactive (C), the conditions for default ADS implementation in the inactive state may be applied, but additional conditions may be applied during an ongoing MRM.

In the case where the state is switched from MRM to MRC (D), the vehicle speed is set to 0 (V_sv=0 [kph]), standstill management is enabled, and a risk warning light is applied.

In the case of ADS Inactive, the ADS is released from the state and does not perform the DDT function.

The MRC is a state where the risk is minimum, for example, the subject vehicle is stable and stationary.

In the MRC state, the ADS performs standstill management. The ADS turns on risk warning lights. The ADS communicates with the activated human user.

As used herein, a vehicle may be referred to as a means of transportation, including robots, urban air mobility (UAM), and automated driving devices.

FIG. 2 illustrates a minimum risk maneuver (MRM) according to embodiments.

FIG. 2 illustrates an example MRM process for MRM. The detailed process of the MRM may vary from ADS to ADS.

When an ADS requests an MRM, the MRM is performed through the following steps

Monitoring of ADS status: First, the ADS checks the status of the system. It determines the current DDT performance capabilities of the ADS by analyzing the severity of the malfunction, identifying its impact on the system, and checking the conditions of related system components.

Determining MRM type: The most appropriate MRM type is selected. The determination includes internal (system status) and external (e.g., traffic density, ODD) information. By default, it is recommended to maintain the MRM type selection. However, the type may change if significant internal or external factors change or if changes in traffic conditions make the selected MRM infeasible. In the case where the MRM type changes while the ADS is performing the MRM, the ADS ensures that multiple MRM type changes do not delay the system from reaching the MRC in a reasonable and safe manner. MRM implementation: Includes longitudinal and lateral control to perform the selected MRM. The above steps iterate until the vehicle reaches the MRC state. During the MRM process, a human user may intervene and take over the DDT.

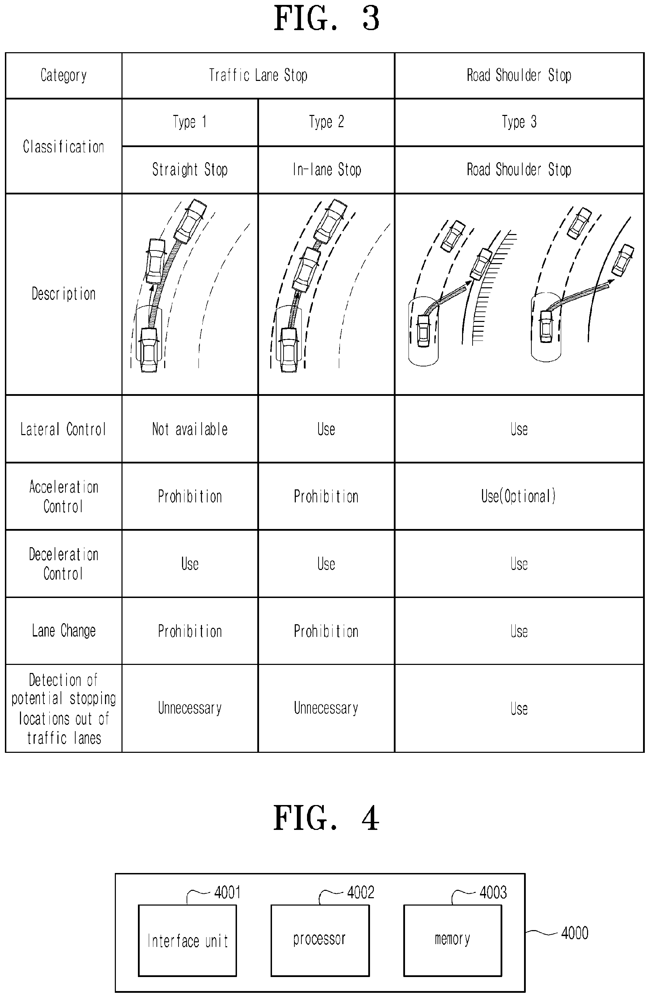

FIG. 3 shows an MRM classification.

Depending on the internal and external conditions of the ADS-equipped vehicle, the available MRMs may vary. MRMs are categorized into three types as shown in FIG. 3. The MRM types may be referred to as MRM Type 1, MRM Type 2, and MRM Type 3. MRMs may be categorized into Traffic Lane Stop and Road Shoulder Stop based on the location of the stop. Additional classes may be added according to embodiments.

MRM Type 1 represents the straight stop, where lateral control may not be available, acceleration control may be prohibited, deceleration control may be used, lane change may be prohibited, and detection of potential stopping locations out of traffic lanes may not be necessary.

MRM Type 2 represents the traffic lane stop, where lateral control may be available, acceleration control may be prohibited, deceleration control may be used, lane change may be prohibited, and detection of potential stopping locations out of lanes may be unnecessary.

MRM Type 3 represents the shoulder stop, where lateral control may be available, acceleration control may be optionally used, deceleration control may be used, lane change may be used, and detection of potential stopping locations out of lanes may be used.

The traffic lane stop is a method of emergency stopping among other road users when a critical malfunction occurs in the subject vehicle or its ADS. There are two types of traffic lane stops: straight stop and in-lane stop. The traffic lane stop may affect traffic flow and may potentially contribute to secondary collisions depending on the work area.

The straight stop is a method of stopping a vehicle using only longitudinal control without active lateral control. The straight stop uses longitudinal deceleration control to stop the vehicle when lateral control is not available. The straight stop is applied only when lateral control is not possible available (e.g., lane detection failure, malfunction of the steering actuator) or there is no lane to follow in the ODD (e.g., a valet parking system).

Because lateral control is not available during the straight stop MRM, the vehicle may cross the lane boundary or stop outside the lanes. The straight stop includes deceleration control only.

The in-lane stop is a method of stopping the vehicle within the boundaries of the lane in which the vehicle is traveling when the MRM is initiated. Longitudinal deceleration and lateral control are used, as well as environmental (sensor, map data, etc.) information about the path (and optionally a target ahead). The in-lane stop may be applied in situations where lane change is not possible or it is not possible to drive to reach a shoulder stop location. The MRC is achieved within the boundaries of the current lane.

Road shoulder stop: For road shoulder stops, both lateral and longitudinal controls are used to ensure that the subject vehicle stops as far away from the traffic flow as possible. As a result of the shoulder stop maneuver, at least a portion of the vehicle remains stationary outside the lane. The road shoulder stop maneuver is intended to minimize the impact of the MRM on nearby road users and to help passengers exit the vehicle in a safe manner.

The road shoulder stop uses both longitudinal and lateral controls as well as information about the driving environment (sensor, map data, or other means for driving environment awareness) related to the road ahead and the related lane. For road shoulder stops, the ADS may determine the location to stop the vehicle and determine whether the vehicle can reach the location to stop.

Lane boundary crossing may be determined by the ADS performing MRM, and the number of lane boundary crossings is not limited. Lane change is made only toward the target shoulder intended by the MRC. If safe interaction with other vehicles is necessary, acceleration control may be performed while driving to a potential stopping location. The MRC may be achieved on a hard road shoulder by partially or completely removing the SV from the active lane.

Changing the MRM type: During MRM execution, an additional relevant event may occur inside or outside the vehicle, or the ADS may recognize additional information. When the ADS determines that it is not appropriate to reach the initially intended MRC, the ADS may change the intended MRC to a lower MRM type. The MRM type may only be changed in one direction: from a higher type to a lower type. If the MRM type is changed while the ADS is performing the MRM, the ADS ensures that multiple MRM type changes do not delay the system from reaching the MRC in a reasonable and safe manner.

FIG. 4 illustrates a vehicle control device according to embodiments.

A vehicle control device 4000 according to the embodiments is a device that controls the operation of a vehicle according to embodiments. The vehicle control device may be referred to as an integrated autonomous vehicle controller 600. The vehicle control device may include an interface unit 4001, a processor 4002, and a memory 4003.

The memory may store instructions, signaling information, data, and the like for performing operations according to embodiments. The memory may be connected to the interface unit and the processor to transmit and receive necessary signals.

The interface unit may receive signals, information, data, and the like delivered to the vehicle control device and pass the same to the memory and/or the processor. It may also deliver signals, information, data, and the like generated by the memory and/or processor to the vehicle and/or the driver and/or passengers.

The processor may perform control operations of the vehicle according to embodiments based on the data and/or instructions stored in the memory.

The vehicle control device of FIG. 4 may correspond to a device mounted on the vehicle, or may correspond to a terminal device that controls the vehicle.

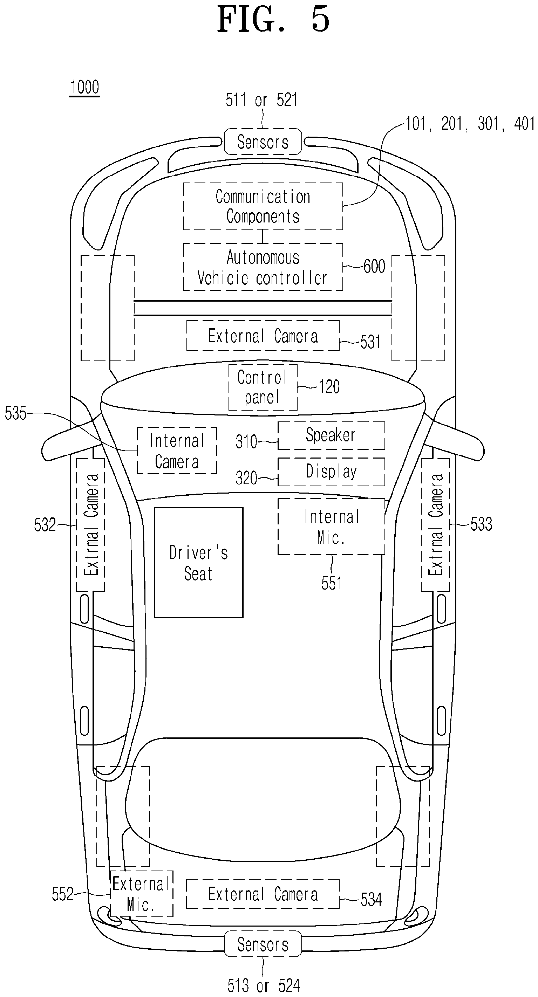

FIG. 5 illustrates a vehicle structure according to embodiments.

A vehicle according to embodiments may be configured as shown in FIG. 5 and may perform automated driving by an automated driving control system. The vehicle according to the embodiments may be referred to as an autonomous vehicle, a robot, urban air mobility (UAM), an automated driving device, and the like.

The autonomous vehicle 1000 may be implemented mainly based on an integrated autonomous vehicle controller 600 that transmits and receives data necessary for automated driving control of the vehicle through a driving information input interface 101, a travel information input interface 201, an occupant output interface 301, and a vehicle control output interface 401. The integrated autonomous vehicle controller may be referred to herein as a controller, processor, or simply a control unit.

The integrated autonomous vehicle controller may acquire driving information according to an occupant's operation of a user input unit in either an automated driving mode or a manual driving mode of the vehicle through the driving information input interface. The user input unit may include a driving mode switch and control panel 120 (e.g., a navigation terminal mounted on the vehicle, a smartphone or tablet carried by the occupant, etc.). Thus, the driving information may include travel mode information and navigation information about the vehicle.

In addition, the integrated autonomous vehicle controller may provide warning information along with the driving state information described above to the driver through the occupant output interface when it is determined that the driver needs to be warned in the automated driving mode or manual driving mode of the vehicle. A speaker 310 and a display 320 may be included to audibly and visually output such travel state information and warning information. The display may be implemented as the same device as the control panel described above, or may be implemented as a separate, independent device.

Further, the integrated automated driving controller may communicate control information for controlling the driving of the vehicle in the automated driving mode or manual driving mode of the vehicle to sub-control systems applied to the vehicle via the vehicle control output interface. The sub-control systems for controlling the driving of the vehicle may include at least one of a motor control system, an engine control system, a brake control system, and a steering control system. The integrated autonomous vehicle controller may communicate at least one of the motor control information, the engine control information, the brake control information, and the steering control information as control information to each of the sub-control systems via the vehicle control output interface.

The integrated automated driving controller may acquire driving information according to the driver's operation and travel information indicative of the travel state of the vehicle via the driving information input interface and the travel information input interface, respectively, and may provide travel state information and warning information generated based on the automated driving algorithm via the occupant output interface.

To ensure reliable automated driving of the vehicle, the automated driving device according to embodiments may include sensors configured to detect objects around the vehicle, such as neighboring vehicles, pedestrians, roads, or fixed facilities (e.g., traffic lights, milestones, traffic signs, construction fences, etc.).

The sensors may include one or more of a LiDAR sensor, a radar sensor, and a camera sensor to detect nearby objects outside of the vehicle. The sensors may include a front LiDAR sensor 511, a front radar sensor 521, a rear LiDAR sensor 513, a rear radar sensor 524, a left camera sensor 532, a right camera sensor 533, an internal camera sensor 535, a front camera sensor 531, and a rear camera sensor 534. The sensors may be associated with microphones 551 and 552.

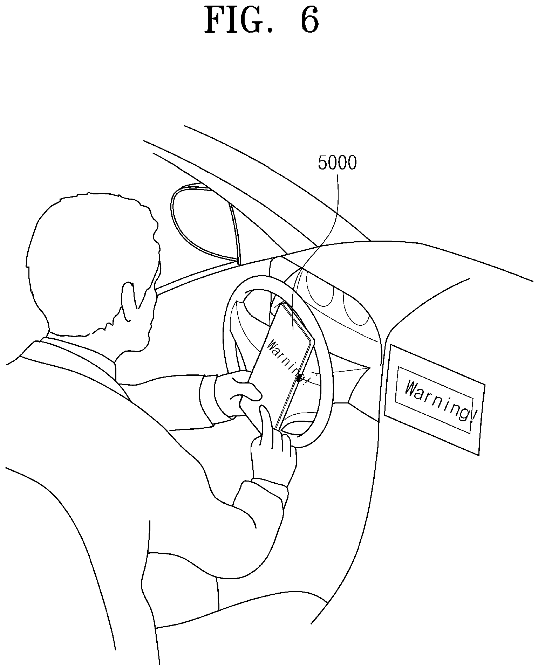

FIG. 6 illustrates an example of data transmission between an ADS and a user terminal according to the present disclosure.

When an ADS is used at automation level 3 or higher, it may be necessary to get a driver back in a driver's seat to take a wheel or perform some action if the system is attempting to leave an Operational Design Domain (ODD). In this case, the ADS should inform a user of information to prompt an appropriate action.

For notification, an appropriate means of transmission should be selected according to a purpose, and importance/emergency level and whether to make a request for a user action should be considered. In this case, a prompt message is delivered through various in-vehicle visual, auditory, and tactile devices such as an instrument panel and a navigation display.

In addition, if a user is immersed in a user terminal 5000 such as a smartphone, as shown in FIG. 6, it may be effective to deliver information through a device viewed by the user as well as a device installed in a vehicle.

In addition, if a portable device is paired with the vehicle, some information of the corresponding device is used as an auxiliary detection function to check a user's follow-up readiness and biological conditions, thereby supporting a driver monitoring device in the vehicle.

When the ADS performs automated driving with a vehicle control, it may transmit and receive information to and from the user terminal for communication with a driving-related user.

The information transmitted from the ADS to the user terminal may be mainly y classified into simple notification information that does not require a user's response and information that requires a user's response.

The user terminal may transmit user response information or user's new request information to the ADS.

When a plurality of informations are transmitted from the ADS to the user terminal, a transmission priority of each of the informations may be set.

When the user terminal processes (e.g., displays) the information received from the ADS, a processing priority of each information may be set.

When a plurality of informations are transmitted from the user terminal to the ADS, a transmission priority of each of the informations may be set.

In the present disclosure, the transmission priority or the processing priority may be set in advance. Alternatively, the transmission priority or the processing priority may be aperiodically set based on a user input.

As shown in FIG. 6, the present disclosure intends to describe a transmission or processing priority of data transmitted from the ADS to the user terminal (e.g., smartphone) or data transmitted from the user terminal to the ADS.

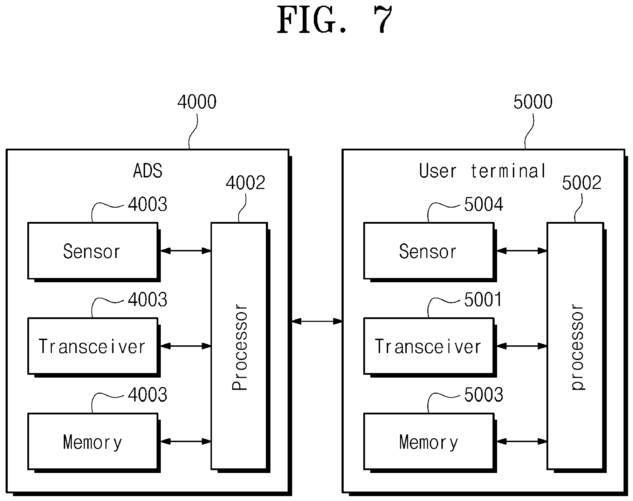

FIG. 7 is a block diagram illustrating a system related to the present disclosure.

Referring to FIG. 7, an ADS 4000 is an automated driving system, including a transceiving unit 4001, a processor 4002, and a memory 4003, and may additionally include a sensing unit 4004. The ADS 4000 may be referred to as an ADS device.

The processor 4002 may set a priority of data transmitted/received with a user terminal 5000. Alternatively, the processor 4002 may transmit data according to the set priority or process the received data according to the set priority. The memory 4003 may store a transmission priority or a processing priority of data transmitted/received with the user terminal 5000. The sensing unit 4004 may obtain various data related to surroundings of the ADS 4000 or automated driving.

The user terminal 5000 is a terminal of a user who rides in a vehicle driven through an automated driving system, and may include a transceiving unit 5001, a processor 5002, and a memory 5003, and may additionally include a sensing unit 5004.

The processor 5002 may set a priority of data transmitted/received with the ADS 4000. Alternatively, the processor 5002 may transmit data according to the set priority or process the received data according to the set priority. The memory 5003 may store a transmission priority or a processing priority of the data transmitted/received with the ADS 4000. The sensing unit 5004 may obtain various data related to surroundings of the user terminal 5000 or the automated driving.

Information transmitted and received between the ADS 4000 and the user terminal 5000 may be as follows.

First, automated driving related information transmitted from the ADS 4000 to the user terminal 5000 is as follows.
1. MRM execution notification or emergency safety information notification
   . Notification of MRM execution
      - In the event of a sudden ODD violation, an MRM execution notification is urgently transmitted to the user terminal.
      - User response request status: NO
      - Occurrence condition: MRM execution condition ( 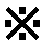 Follow ISO 23793-1, 2)
   . Emergency safety information notification
      - Notification to warn of a safety hazard
      - User response request status: NO
      - Occurrence conditions: ADS failure, steering/braking failure, unstable driving environment, etc.
2. MRC arrival or manual driving request through user fallback
   - User response request: YES
   - Occurrence conditions: ODD violations, emergency vehicle access, aggressive traffic obstruction, police vehicle control, vehicle equipment failure, ADS failure, etc.
3. Setting up vehicle driving related controls or information requiring user approval
   - User response request: YES
   - Type of approval request: vehicle overtaking, passing (intersection, tollgate, IC (interchange, etc.), ADS level change, route selection, etc.

As described above, since the MRM execution notification or the emergency safety information notification is a "notification", a separate user response may not be required. Since it is unclear whether the user may be delegated control authority again, the MRC arrival or manual driving request through the user fallback may request a user response. The user approval request requires a user response.

When an ADS needs to transmit a plurality of (different) informations to a user terminal at the same time, it is necessary to set a priority of each information so that high-priority information may safely arrive at the user terminal.

Therefore, a transmission priority of the above automated driving related information may be set as follows.

Prior to that, information including MRM execution notification or emergency safety information notification will be referred to as information of a first type, information including an MRC arrival or manual driving request through user fallback will be referred to as information of a second type, and information including setting of vehicle driving r elated control or information requiring a user approval will be referred to as information of a third type.

### [First Proposal of Transmission Priority]

### First type information > Second type information > third type information

A priority of the first type information may be set higher than that of the second type information, and a priority of the second type information may be set higher than that of the third type information.

When MRM is executed, s vehicle or an automated driving system will be in a status of facing an emergency/emergency situation such as a situation right before ODD violation. When MRM is executed, a user needs to know and prepare for various emergency situations in advance.

Also, upon emergency safety information notification, the vehicle or the automated driving system will be in a status of facing a serious system failure. Therefore, even if the ADS executes MRM at its own judgment, a user needs to recognize as soon as possible that a serious system failure has occurred in the vehicle.

Accordingly, the first type information may be set to have the highest transmission priority.

A user's response is required for an MRC arrival or manual driving request through user fallback. After reception of the user's response, the MRC arrival or manual driving is performed by falling back to the user, whereby there is a higher probability that the urgency/emergency of the situation is lower than that of the first type information. Accordingly, the second type information may be set to have a lower transmission priority than the first type information.

Since the third type information corresponds to a "request" or similar information for requesting a user approval for vehicle overtaking, (intersection, toll gate, IC, etc.) passing, ADS level change, route selection, etc., the urgency/emergency level is low, and a user approval for this may be received relatively leisurely. Accordingly, the third type information may be set to have the lowest transmission priority.

### [Second Proposal of Transmission Priority]

### Second type information > First type information > Third type information

A priority of the second type information may be set higher than that of the first type information, and the priority of the first type information may be set higher than that of the third type information.

For example, for the MRC arrival, the ADS may execute the MRM, or a user may fallback and arrive at the MRC. In this case, in order to receive a user response at an early stage, the ADS may transmit the second type information to the user terminal with the highest priority. That is, the ADS may preferentially transmit the second type information to the user terminal to wait for a user response. Upon receiving a user fallback response in a timely manner, the ADS may fall back to the user to induce the MRC arrival or manual driving.

If failing to receive the user response in a timely manner, the ADS may execute the MRM to transmit an MRM execution notification to the user terminal.

In the second proposal, since the MRC arrival through user fallback is considered most preferentially, the first type information may be set to have a lower transmission priority than the second type information.

The third type information may be set to have the lowest transmission priority for the same reason or basis as described in the first proposal.

When the user terminal 5000 has to process a plurality of (different) of informations received from the ADS 4000, a priority of each information may be set to process a high-priority information first.

Here, "processing" may include a sound alarm, a display of the corresponding information on a screen, etc. "Processing required information" is information requesting a user's response. Therefore, information that the ADS needs to deliver to a user but does not necessarily require a user's response may be treated as not corresponding to the present "processing required information".

### [First Proposal of Processing Priority]

### Second type information > Third type information

In a first proposal, since the first type information is not the information that necessarily requires a user's response, it may not correspond to the information processed by the user terminal 5000. Accordingly, only the second type information and the third type information may be the targets to be processed.

In the case of the second type information, since a user response for user fallback is required, the user terminal 5000 may output (or display) the present request on the display of the user terminal. Compared with a user approval for vehicle overtaking, passing (intersection, toll gate, IC, etc.), ADS level change, and the like, the second type information requires a user's prompt response to an urgency/emergency situation, and thus the priority may be set highest.

In the case of the third type information, it is the information that requests a user approval for vehicle overtaking, passing (intersection, toll gate, IC, etc.), ADS level change, route selection, etc. A situation in which an approval for the third type information is required is a situation in which an urgency/emergency level is low, and thus the user approval may be received relatively leisurely. Accordingly, it may be set to the lowest priority when information is processed in the user terminal 5000.

Since the first type information is the information transmitted in an urgent situation, its urgency or emergency level may be the highest, but it is not the information that requires a user response as described above. Therefore, rather than being processed by the user terminal 5000, the vehicle or ADS may process (e.g., display) an MRM execution notification or an emergency safety information notification.

### [Second Proposal of Processing Priority]

### First type information > Second type information > Third type information

As in the first proposal of the transmission priority of the ADS 4000, in the processing at the user terminal 5000, a priority of the first type information may be set higher than the processing priority of the second type information, and the priority of the second type information may be set higher than the processing priority of the third type information.

### [Third Proposal of Processing Priority]

### Second type information > First type information > Third type information

In the third proposal, the first type information may be set to be preferentially processed by the user terminal 4000 rather than the third type information. This is a compromised proposal between the necessity of a user response and the urgency/emergency of a situation.

### [Fourth Proposal of Processing Priority]

### Second type information > Third type information > First type information

The fourth proposal is similar to the first proposal. Since the first type information is treated as the information supposed to be processed by the vehicle or the ADS 4000 rather than the user terminal 5000, the first type information may be set to have the lowest processing priority. A processing priority of the second type information may be set higher than that of the third type information (refer to the first proposal).

Meanwhile, although not described, the processing at the user terminal 5000 may have a meaning equivalent to the reception at the user terminal 5000. That is, "reception" may be interpreted as indicating an overall procedure for processing received data, such as decoding and decryption. That is, a priority of the processing and a priority of the reception may be used interchangeably.

Hereinafter, priorities of automated driving related information transmitted from the user terminal 5000 to the ADS will be described.

When the user terminal has to simultaneously transmit a plurality of (different) informations to the ADS, it is necessary to set the priority of each information so that high-priority information may safely arrive at the ADS. Regarding the information transmitted from the user terminal 5000 to the ADS 4000, a priority of transmission (at the user terminal) may be set equal to that of processing (at the ADS).

First, automated driving related information transmitted from the user terminal 5000 to the ADS 4000 is as follows.
- Information notifying that a user is unable to perform DDT fallback

A user terminal or a user monitoring device may notify an ADS that a user is unable to perform DDT fallback. In this case, the user terminal or the user monitoring device may include, for example, a driver monitoring camera, a smart watch, a mobile phone, or the like.

A situation in which it has to be notified that a user is unable to perform DDT fallback may include, for example, a situation in which 1) abnormal user biometric information or 2) abnormal user response is detected.

The abnormal user biometric information includes, but is not limited to, abnormal body temperature, abnormal blood pressure, abnormal pulse rate, abnormal skin electrical resistance, abnormal breathing, abnormal heart rate, alcohol consumption, drug administration, and the like.

The detection of user reaction abnormalities includes, but is not limited to, drowsiness, motion abnormalities (image module sensing), and device manipulation abnormalities (e.g., abnormalities such as manipulation timing, web browsing timing, etc.).
- User reaction to the setting of vehicle driving related controls or information that requires a user approval (approval/disapproval)

In response to a request made by the ADS, the user may respond to the ADS for an approval/disapproval. For example, a response to vehicle overtaking, (intersection, toll gate, IC, etc.) passing, ADS level change, route selection, and the like may be requested from the ADS.

Before explaining the priorities for them, an information notifying that a user is unable to perform DDT may be referred to as a fourth type information, and an information including a user's response to the setting of a vehicle driving related control or information that requires a user approval may be referred to as a fifth type information.

### [First Proposal of Transmission Priority]

### Fourth type information > Fifth type information

A priority of the fourth type information may be set higher than that of the fifth type information.

When a user is unable to perform DDT fallback, since there are many cases where an emergency situation (e.g., a body abnormality) occurs in the user, it needs to be delivered d to the ADS as a top priority. Since a user approval/disapproval in response to an ADS request is often transmitted in a situation of low urgency/emergency level, a transmission priority may be set to be low. Accordingly, a priority of the fourth type information may be set higher than that of the fifth type. In addition, as described above, regarding a processing priority at the ADS 4000, a priority of the fourth type information may also be set higher than that of the fifth type information.

Meanwhile, although not described, the processing in the ADS 4000 may have a meaning equivalent to that of the reception in the ADS 4000. That is, "reception" may be construed as meaning an overall procedure for processing received data, such as decoding, decryption, etc. That is, a priority of the processing and a priority of the reception may be used interchangeably.

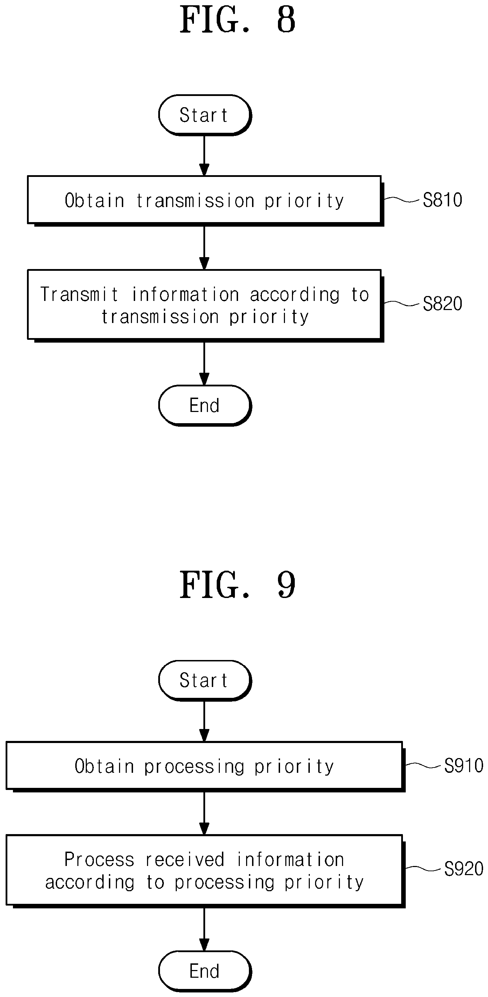

FIG. 8 is a flowchart illustrating information transmission based on a transmission priority according to the present disclosure.

Information transmission according to FIG. 8 may be performed by the ADS 4000 or the user terminal 5000. It will be classified and explained with respect to an execution subject.

The ADS 4000 may transmit automated driving related information to the user terminal 5000. The ADS 4000 may obtain information on a priority of the automated driving related information to be transmitted to the user terminal 5000 (S810).

The ADS 4000 may be configured to transmit a plurality of different types of automated driving related information to the user terminal 5000. Accordingly, the ADS 4000 may transmit a plurality of different types of automated driving related information to the user terminal 5000 according to the obtained information on the priority (S820).

The automated driving related information to be transmitted to the user terminal 5000 may include at least two of a first type information including a Minimal Risk Manoeuvre (MRM) execution notification or emergency safety information, a second type information including an Minimal Risk Condition (MRC) arrival or manual driving request through a user fallback, and a third type information including a setting of vehicle driving related control or information that requires a user approval.

A transmission priority of the automated driving related information of the ADS 4000 may refer to the foregoing description.

According to another embodiment, the user terminal 5000 may transmit automated driving related information to the ADS 4000. The user terminal 5000 may obtain information on the priority of the automated driving related information to be transmitted to the ADS 4000 (S810).

The user terminal 5000 may be configured to transmit a plurality of different types of automated driving related information to the ADS 4000. Accordingly, the user terminal 5000 may transmit a plurality of different types of automated driving related information to the ADS 4000 according to the obtained information on the priority (S820).

The automated driving related information to be transmitted to the ADS 4000 may include a fourth type information notifying that a user is unable to perform Dynamic Driving Task (DDT) fallback, or a fifth type information indicating a user's response to the setting of the vehicle driving related control or information that requires the user's approval transmitted to the user terminal.

A transmission priority of the automated driving related information of the user terminal 5000 may refer to the foregoing description.

FIG. 9 is a flowchart illustrating information processing based on a processing priority according to the present disclosure.

Processing of information according to FIG. 9 may be performed by the ADS 4000 or the user terminal 5000. It will be classified and explained with respect to an execution subject.

The ADS 4000 may obtain information on a priority of automated driving related information to be received from the user terminal 5000 (S910).

The ADS 4000 may be configured to receive a plurality of different types of automated driving related information from the user terminal 5000. The ADS 4000 may process a plurality of different types of automated driving related information according to the obtained information on the priority (S920).

A priority of information processing of the ADS 4000 may refer to the foregoing description.

In another embodiment, the user terminal 5000 may obtain information on a priority of automated driving related information to be received from the ADS 4000 (S910).

The user terminal 5000 may be configured to receive a plurality of different types of automated driving related information from the ADS 4000. The user terminal 5000 may process a plurality of different types of automated driving related information according to the obtained information on the priority (S920).

A priority of processing information of the user terminal 5000 may refer to the foregoing description.

Meanwhile, as further embodiment of the present disclosure, a vehicle (not shown) including an apparatus for transmitting or processing the above-described automated driving related information is proposed. The vehicle may include a device 400 that includes a transceiver unit 4001 and a processor 4002 that controls the transceiver 4001 to transmit/receive automated driving related information. The description of the device 4000 may refer to the foregoing description.

In the above specification, a "device" or a "server" that transmits/receives and processes automated driving related information or a configuration included therein is described as performing the operation. Yet, the "device", "server" and components belonging thereto are just names and the scope of rights is not subordinate to them.

In other words, the proposed technology may be performed as a name other than the device, and the method or scheme described above may be performed by software for vehicle or autonomous control or by computer or other machine or device readable codes.

In addition, as another aspect of the present disclosure, the operation of the aforementioned proposed technology may be provided as a code that can be implemented, embodied, or executed by a "computer" (a comprehensive concept including a System-on-Chip (SoC), a (micro-) processor, etc.), a computer-readable storage medium or computer program product that stores or includes the code, and the like. The scope of rights of the present disclosure may extend to the code or computer-readable storage medium or computer program product including the code.

The detailed description of the preferred embodiments of the present disclosure disclosed as described above has been provided so that those skilled in the art may implement and embody the present disclosure.

Although described above with reference to the preferred embodiments of the present disclosure, it will be understood by those skilled in the art that the present disclosure described in the following patent claims may be variously amended and modified.

Therefore, the present disclosure is not intended to be limited to the embodiments shown here, but to give a broadest scope consistent with the principles and novel features disclosed herein.

## Claims

1. An apparatus configured to transmit and/or receive and process automated driving related information, the apparatus comprising:
a transceiver; and
a processor configured to transmit and/or receive the automated driving related information with a user terminal through the transceiver and process the automated driving related information,
wherein the processor is configured to obtain information on a priority of the automated driving related information to be transmitted to the user terminal, and
wherein in a case in which the processor transmits a plurality of different types of automated driving related information, the processor is configured to transmit the plurality of the different types of the automated driving related information to the user terminal according to the obtained information on the priority.

2. The apparatus of claim 1, wherein the automated driving related information to be transmitted to the user terminal comprises:
a first type information including Minimal Risk Manoeuvre (MRM) execution notification or urgency safety information;
a second type information including Minimal Risk Condition (MRC) arrival or manual driving request through user fallback; and
a third type information including configuration of driving related control or information requiring a user approval.

3. The apparatus of claim 2, wherein a priority of the first type information is set higher than a priority of the second type information, and wherein the priority of the second type information is set higher than a priority of the third type information.

4. The apparatus of claim 2, wherein a priority of the second type information is set higher than a priority of the first type information, and wherein the priority of the first type information is set higher than a priority of the third type information.

5. The apparatus of any one of claims 1 to 4, wherein the processor is configured to obtain information on a priority of the automated driving related information to be received from the user terminal and
wherein based on receiving or processing a plurality of different types of automated driving related information from the user terminal, the processor is configured to process the plurality of the different types of the automated driving related information according to the obtained information on the priority.

6. The apparatus of claim 5, wherein the automated driving related information to be received from the user terminal, comprising:
a fourth type information notifying that a user is unable to perform Dynamic Driving Task (DDT) fallback; and
a fifth type information indicating a user's response to configuration of driving related control or information requiring a user approval transmitted to the user terminal.

7. The apparatus of claim 6, wherein a priority of the fourth type information is set higher than a priority of the fifth type information.

8. An apparatus configured to transmit and/or receive, and process automated driving related information, the apparatus comprising:
a transceiver; and
a processor configured to transmit and/or receive the automated driving related information to or from an automated driving system through the transceiver and process the received automated driving related information,
wherein the processor is configured to obtain information on a priority of the automated driving related information to be received from the automated driving system, and
wherein based on receiving or processing a plurality of different types of automated driving related information from the automated driving system, the processor is configured to process the plurality of the different types of the automated driving related information according to the obtained information on the priority.

9. The apparatus of claim 8, the automated driving related information to be received from the automated driving system comprises:
a first type information including Minimal Risk Manoeuvre (MRM) execution notification or urgency safety information;
a second type information including Minimal Risk Condition (MRC) arrival or manual driving request through user fallback; and
a third type information including configuration of driving related control or information requiring a user approval.

10. The apparatus of claim 9, wherein a priority of the first type information is set higher than a priority of the second type information, and wherein the priority of the second type information is set higher than a priority of the third type information.

11. The apparatus of claim 9, wherein a priority of the second type information is set higher than a priority of the first type information, and wherein the priority of the first type information is set higher than a priority of the third type information.

12. The apparatus of claim 9, wherein a priority of the second type information is set higher than a priority of the third type information, and wherein the priority of the third type information is set higher than a priority of the first type information.

13. The apparatus of any one of claims 8 to 12, wherein the processor is configured to obtain information on a priority of the automated driving related information to be transmitted to the automated driving system, and
wherein in a case in which the processor transmits a plurality of different types of automated driving related information, the processor is configured to transmit the plurality of the different types of the automated driving related information to the automated driving system according to the obtained information on the priority.

14. The apparatus of claim 13, wherein the automated driving related information to be transmitted to the automated driving system comprises:
a fourth type information notifying that a user is unable to perform Dynamic Driving Task (DDT) fallback; and
a fifth type information indicating a user's response to configuration of driving related control or information requiring a user's approval transmitted to the user terminal.

15. The apparatus of claim 14, wherein a priority of the fourth type information is set higher than a priority of the fifth type information.
